**Europäisches Patentamt**

**European Patent Office**

**Office européen des brevets**

(19)

(11) Veröffentlichungsnummer : **0 447 924 B1**

## (12) EUROPÄISCHE PATENTSCHRIFT

(45) Veröffentlichungstag der Patentschrift :
**05.05.93 Patentblatt 93/18**

(51) Int. Cl.⁵ : **C08F 265/04,** C08F 2/24,
C08F 259/04, C08F 2/16,
C08F 285/00

(21) Anmeldenummer : **91103766.1**

(22) Anmeldetag : **12.03.91**

(54) **Verfahren zur Herstellung eines Vinylchlorid-Polymerisates.**

(30) Priorität : **13.03.90 DE 4007908**

(43) Veröffentlichungstag der Anmeldung :
**25.09.91 Patentblatt 91/39**

(45) Bekanntmachung des Hinweises auf die
Patenterteilung :
**05.05.93 Patentblatt 93/18**

(84) Benannte Vertragsstaaten :
**BE DE FR IT**

(56) Entgegenhaltungen :
**EP-A- 0 222 127
DE-A- 1 770 999
FR-A- 2 078 617
US-A- 3 793 406
US-A- 3 853 968**

(73) Patentinhaber : **HOECHST
AKTIENGESELLSCHAFT
Postfach 80 03 20
W-6230 Frankfurt am Main 80 (DE)**

(72) Erfinder : **Klippert, Heinz, Dr.
Hochfellnstrasse 14
W-8269 Burgkirchen (DE)**

**Beschreibung**

Die Erfindung betrifft ein verfahren zur Herstellung eines modifizierten Vinylchlorid-Polymerisates, das aus Teilchen besteht, die unterschiedlich zusammengesetzte Schichten aufweisen, und das zu Formkörpern mit guter Schlagzähigkeit und Transparenz verarbeitet werden kann.

Schlagzähes, witterungsstabiles Polyvinylchlorid wird für Fensterprofile, Lichtwand- und Fassadenkonstruktionen in großem Umfang eingesetzt. In diesem Marktteil hat die Schlagzähmodifizierung von Polyvinylchlorid durch Acrylsäureester-Elastomere in den letzten Jahren beständig zugenommen. Diese Modifizierung verursacht aufgrund des gegenüber Polyvinylchlorid niedrigen Brechungsindex der Acrylsäureester-Polymeren jedoch eine Trübung, so daß diese Produkte für transparente ("glasklare") Einsatzgebiete nicht geeignet sind.

Es ist bekannt, daß die Transparenz eines mit einem Acrylsäureester-Elastomer schlagfest gemachten Polyvinylchlorids um so besser wird, je kleiner die Partikelgröße der dispersen Phase ist. Es läßt sich jedoch die Partikelgröße nicht beliebig absenken, ohne die Effektivität der Schlagzähmodifizierung ungünstig zu beeinflussen.

Aus Sarvetnick "Polyvinyl Chloride" Van Nostrand Reinhold Comp., New York, 1969, Seite 123 ist bekannt, daß Vinylchlorid-Polymerisate zur Erzeugung transparenter Formkörper weniger als 10 % Schlagzähmodifikator enthalten sollten und die Transparenz verbessert werden kann, wenn die Teilchengröße der dispergierten Phase unter 100 nm liegt, wobei diese Teilchengröße jedoch die untere Grenze für eine effektive Schlagzähmodifikation ist.

Es ist ferner aus DE 32 16 989 bekannt, die Transparenz dadurch zu verbessern, daß Acrylatmonomere mit höherem Brechungsindex als Elastomerphase eingesetzt werden (zum Beispiel Polymere aus $CH_2 = CH$ - $CO$ - $O$ - $R$ - Aryl). Es werden so die angestrebten Produkte erhalten, jedoch stellen die technisch nicht leicht zugänglichen Monomeren einen wirtschaftlich wenig attraktiven Lösungsweg dar.

In der DE 22 22 867 ist die Herstellung von mehrschichtigen Polymeren beschrieben, die einen harten Innenkern (zum Beispiel vernetztes Polystyrol, Brechungsindex größer als der von Polyvinylchlorid) und eine kautschukelastische Außenschicht (zum Beispiel ein vernetztes Acrylsäureester-Polymerisat, Brechungsindex kleiner als der von Polyvinylchlorid) haben. Für eine hohe Transparenz soll der Styrolanteil circa 55 betragen. Die Herstellung erfolgt in zwei getrennten aufeinanderfolgenden Emulsionspolymerisationen, der sich dann eine Pfropfpolymerisation (Oberpolymerisation) mit Vinylchlorid in wäßriger Emulsion oder Suspension anschließt. Wie schon in DE 35 39 414 (Seite 2, Zeilen 59 ff.) festgestellt wird, weisen die so erhaltenen Formmassen einen schlechten Oberflächenglanz und Trübungen auf. Bei der Herstellung sind besondere Maßnahmen zu beachten. Zum Beispiel die Notwendigkeit, sowohl nach der Herstellung des Polystyrol-Saatlatex als auch nach der ersten Oberpolymerisation mit Acrylsäureester eine Zerstörung der Katalysatorreste und eine Austreibung der nicht polymerisierten Monomeren vorzunehmen, wodurch die Bildung neuer Teilchen in der darauffolgenden Polymerisation vermieden werden soll, weil diese die Transparenz verschlechtern. Diese Zwischenbehandlungen sind zeit- und energieaufwendig. Das nach der Pfropfpolymerisation (Oberpolymerisation) mit Vinylchlorid erhaltene Korn ist nicht porös, schwierig zu Trocknen und von restlichen Monomeren zu befreien.

In der DE 35 39 414-A1 wird ein verbessertes Verfahren zur Herstellung von transparentem und schlagzähem Polyvinylchlorid beschrieben. Gegenüber der DE 22 22 867 wird das Kern-Schale-Polymerisat in einer Eintopfreaktion im halbkontinuierlichen Emulsionsverfahren hergestellt, die Dispersion wird pfropfpolymerisiert, indem sie in Gegenwart des Vinylchlorid-Monomeren bei einer leicht erhöhten Temperatur eine Zeit lang gerührt wird, wobei der Vinylchlorid-Umsatz 10 % nicht übersteigen darf, danach wird durch Aufheizen auf die Polymerisationstemperatur auspolymerisiert. Das resultierende Produkt weist eine breite Teilchenverteilung mit zum Stauben neigenden Feinstanteilen auf. Die Raum-Zeit-Ausbeute des Verfahrens ist gering, die Kälteschlagzähigkeit und der Anteil an reflektiertem Streulicht läßt zu wünschen übrig, wie nachfolgender Vergleichsversuch A zeigt.

Gute Kälteschlagzähigkeit und Oberfläche der daraus hergestellten Formkörper zeigen die nach DE 38 35 509-A1 erzeugten Vinylchlorid-Pfropfpolymerisate auf vernetzte, im wesentlichen Acrylsäureester enthaltende Polymere, jedoch sind solche Polymerisate nicht für hochtransparente (glasklare) Formkörper geeignet.

Es wurde nun ein Verfahren gefunden, daß es ermöglicht, Vinylchlorid-Pfropfpolymerisate mit verbesserten Eigenschaften, insbesondere Transparenz und Kälteschlagzähigkeit der daraus erzeugten Formkörper, nach dem weniger aufwendigen halbkontinuierlichen Polymerisationsverfahren herzustellen.

Das neue Verfahren zur Herstellung eines Polymerisates, das aus einer überwiegenden Menge polymerisierter Einheiten des Vinylchlorids, ferner aus polymerisierten Einheiten mindestens einer aromatischen Vinylverbindung, mindestens eines Acrylsäureesters sowie mindestens einem vernetzend wirkenden Monomeren besteht, Reste von Polymerisationshilfsstoffen enthält und dessen Teilchen aus Polymerschichten unter-

2

schiedlicher Zusammensetzung aufgebaut sind, wobei ohne Zwischenbehandlung der erzeugten Polymerdispersionen unmittelbar hintereinanderfolgende Verfahrensschritte angewendet werden:

a) Herstellung eines Vorpolymerisates, das im wesentlichen aus polymerisierten Einheiten mindestens eines Acrylsäurealkylesters, mindestens eines Methacrylsäurealkylesters oder Mischungen dieser Verbindungen besteht, wobei das Vorpolymerisat zusätzlich polymerisierte Einheiten des Styrols oder des $\alpha$-Methylstyrols oder Einheiten dieser beiden Verbindungen enthalten kann, durch Polymerisation in wäßriger Emulsion in Gegenwart mindestens eines Emulgators mindestens eines wasserlöslichen, radikalisch zerfallenden Initiators und gegebenenfalls eines vernetzend wirkenden Monomeren; danach

b) kontinuierliche oder portionsweise Zugabe eines Gemisches einer aromatischen Vinylverbindung mit einem vernetzend wirkenden Monomeren und gleichzeitig damit Zugabe von einer wäßrigen Lösung eines Emulgators und von einer wäßrigen Losung eines wasserlöslichen, radikalisch zerfallenden Initiators in getrennten Strömen; anschließend

c) kontinuierliche oder portionsweise Zugabe eines Gemisches eines Acrylsäurealkylesters mit einem vernetzend wirkenden Monomeren und gleichzeitig damit Zugabe von einer wäßrigen Lösung eines Emulgators und, wenn erforderlich, von einer wäßrigen Lösung mindestens eines wasserlöslichen, radikalisch zerfallenden Initiators in getrennten Strömen, wobei das durch die Verfahrensschritte a) bis c) erzeugte Polymere x) 41 bis 76 Gew.-% aromatische Vinylverbindung, y) 24 bis 59 Gew.-% Acrylsäurealkylester und z) 0,2 bis 4 Gew.-% vernetzende(s) Monomere(s), jeweils bezogen auf das Polymere, in polymerisierter Form enthält, wobei ferner x + y + z = 100 % ist; danach

d) Polymerisaton von 5 bis 30 Gew.-Teilen des gemäß der Schritte a) bis c) hergestellten Polymeren in wäßriger Dispersion in Gegenwart von 70 bis 95 Gew.-Teilen Vinylchlorid oder einer überwiegend Vinylchlorid enthaltenden Mischung von Monomeren, ferner in Gegenwart mindestens eines Suspendiermittels und mindestens eines öllöslichen, radikalisch zerfallenden Initiators unter Zusatz von Wasser und gegebenenfalls weiteren Polymerisationshilfsstoffen bei 50 bis 80 °C, Entfernung von restlichen, nicht umgesetzten Monomeren sowie von der Hauptmenge der wäßrigen Flotte und Trocknung des so erhaltenen Polymerisates,

ist dadurch gekennzeichnet, daß das in Schritt b) verwendete Monomerengemisch mindestens einen Acrylsäurealkylester und das in Schritt c) verwendete Monomerengemisch mindestens eine aromatische Vinylverbindung enthält.

In einer bevorzugten Ausführungsform des erfindungsgemäßen Verfahrens wird vor Beginn der Polymerisation nach Schritt d) ein Fällungsmittel für den oder die in den Schritten a) bis c) verwendeten Emulgator(en) dem Ansatz vor Zugabe der gemäß a) bis c) hergestellten Polymerdispersion zugesetzt.

Für den Verfahrensschritt a) eignen sich Acrylsäurealkylester mit 2 bis 12 C-Atomen in der Alkylgruppe sowie Methacrylsäureester mit 1 bis 4 C-Atomen in der Alkylgruppe. Vorzugsweise werden n-Butylacrylat, 2-Ethylhexylacrylat oder Methylmethacrylat verwendet. Es können auch Mischungen verschiedener Acrylsäureester und/oder Methacrylsäureester eingesetzt werden. Zusätzlich zu mindestens einem der genannten Acryl- oder Methyacrylsäureester können Styrol oder $\alpha$-Methylstyrol oder Mischungen der beiden Styrole verwendet werden. Wegen der einfacheren Durchführbarkeit kann beispielsweise für den Verfahrensschritt a) dieselbe Monomeren-Mischung eingesetzt werden, wie für den nachfolgend beschriebenen Verfahrensschritt b).

Es können auch vernetzend wirkende Monomere, die mindestens zwei konjugierte Doppelbindungen im Molekül aufweisen, in Mischung mit den Acrylsäureestern verwendet werden, doch ist dies in der Regel nicht erforderlich. Die Polymerisation erfolgt bei 50 bis 90 °C, vorzugsweise bei 60 bis 80 °C, in wäßriger Emulsion unter Rühren in Gegenwart mindestens eines Emulgators und mindestens eines wasserlöslichen, radikalisch zerfallenden Initiators, zweckmäßig bei normalem Atmosphärendruck, wobei folgende Stoffmengen eingesetzt werden:

0,2 bis 2 Gew.-Teile, vorzugsweise 0,5 bis 1,5 Gew.-Teile, Acryl- oder Methacrylsäureester auf je 1 Gew.-Teil Acryl- oder Methacrylsäureester; 0 bis 7 Gew.-Teile, vorzugsweise 0 bis 4 Gew.-Teile, Styrol und/oder $\alpha$-Methylstyrol; 50 bis 100 Gew.-Teile Wasser sowie je 1 Gew.-Teil Monomere(s): 0,02 bis 2 Gew.-Teile, vorzugsweise 0,1 bis 0,5 Gew.-Teile, Emulgator(en) und 0,01 bis 0,2 Gew.-Teile, vorzugsweise 0,02 bis 0,1 Gew.-Teile, Initiator(en), wobei, wenn erforderlich, je 100 Gew.-Teile Monomere(s) 0,5 bis 5 Gew.-Teile eines vernetzend wirkenden Monomeren zugegeben werden können. Die angegebenen Mengenbereiche können in Einzelfällen über- oder unterschritten werden, wobei dann immer noch ein erfindungsgemäßer Effekt erzielt wird. Im allgemeinen werden innerhalb der angegebenen Mengenbereiche gute Ergebnisse erhalten.

Besonders geeignete Emulgatoren sind die Alkali-, Ammonium- oder Magnesiumsalze von Alkylarylsulfonsäuren mit 3 bis 16 C-Atomen im Alkylrest. Wegen ihrer leichten Beschaffbarkeit sind die Salze der Dodecylbenzolsulfonsäure oder Dibutylnaphthalinsulfonsäure bevorzugt.

Als Initiatoren sind beispielsweise geeignet übliche peroxidische Verbindungen, wie Wasserstoffperoxid, Kalium- oder Ammoniumpersulfat oder Azokatalysatoren, beispielsweise Azo-iso-buttersäurenitril oder Azo-bis-dimethylvaleronitril. Zusammen mit den wasserlöslichen peroxidischen Verbindungen können wasserlösliche reduzierende Verbindungen, die zum Aufbau eines Redox-Katalysatorsystems geeignet sind, eingesetzt werden. Geeignet sind beispielsweise Alkalibisulfite, -hydrosulfite, -thiosulfate, -aldehydsulfoxylate sowie auch organische reduzierende Verbindungen, beispielsweise Ascorbinsäure.

Unmittelbar anschließend an den Verfahrensschritt a) erfolgt der Verfahrensschritt b), für den als aromatische Vinylverbindung bevorzugt α-Methylstyrol und insbesondere Styrol in Mischung mit mindestens einem vernetzend wirkenden Monomeren und erfindungsgemäß mit mindestens einem Acrylsäurealkylester eingesetzt werden. Geeignete, vernetzend wirkende Monomere sind Monomere mit mindestens zwei ethylenisch ungesättigten, nicht konjugierten Doppelbindungen. Solche Verbindungen sind beispielsweise Acrylate mehrwertiger Alkohole wie Ethylenglykoldimethacrylat, Diethylenglykoldimethacrylat, Propylenglykoldimethacrylat, Butylenglykoldiacrylat, Trimethylenglykoldiacrylat, Pentamethylenglykoldiacrylat, Glyceryltriacrylat, Trimethylolpropantrimethacrylat, Pentaerythrittetraacrylat; Allylmethacrylat, Diallylester von mono- beziehungsweise polyfunktionellen Säuren, wie Diallylphthalat, Diallylfumarat; Divinylester von zwei- oder dreibasigen Säuren, wie Divinyladipat; Divinylether von mehrwertigen Alkoholen, beispielsweise vom Ethylenglykol; Divinylbenzol oder Divinylsulfon.

Als Acrylsäureester sind beispielsweise Acrylsäurealkylester, die 3 bis 10 C-Atome im Alkylrest enthalten, geeignet, wie zum Beispiel Propylacrylat, Butylacrylat, Pentylacrylat, Hexylacrylat, Heptylacrylat, Octylacrylat, 2-Ethylhexylacrylat, Nonylacrylat oder Decylacrylat. Bevorzugt werden solche Acrylester verwendet, deren Homopolymerisate eine Glasumwandlungstemperatur von höchstens -20 °C zeigen. Es können auch Mischungen verschiedener Acrylsäureester verwendet werden.

Die Polymerisation wird in wäßriger Emulsion in Gegenwart mindestens eines Emulgators und mindestens eines wasserlöslichen, radikalisch zerfallenden Initiators unter Rühren bei 50 bis 90 °C, vorzugsweise bei 60 bis 80 °C, zweckmäßig bei normalem Atmosphärendruck, fortgeführt. Hierbei können sowohl die Monomerenmischung als auch der Emulgator sowie der Initiator, letztere beiden zweckmäßig als wäßrige Lösung, jedes für sich in getrennten Strömen zugegeben werden. Vorteilhaft erzeugt man zuerst aus der Monomerenmischung und der wäßrigen Emulgatorlösung durch Rühren eine Monomeremulsion in Wasser und gibt diese sowie die wäßrige Lösung des Initiators in getrennten Strömen kontinuierlich oder portionsweise zur Polymerdispersion, die nach Verfahrensschritt a) erzeugt wurde.

Für den Verfahrensschritt b) werden folgende Stoffmengen eingesetzt:
38 bis 78 Gew.-Teile einer Mischung, die auf 1 Gew.-Teil eines oder mehrerer Acrylsäurealkylester 1,6 bis 7 Gew.-Teile, vorzugsweise 1,6 bis 4 Gew.-Teile, von einer oder mehreren aromatischen Vinylverbindung(en) enthält;
0,1 bis 1,4 Gew.-Teile mindestens eines vernetzend wirkenden Monomeren sowie je 100 Gew.-Teile Monomerenmischung: 40 bis 120 Gew.-Teile Wasser; 0,8 bis 8 Gew.-Teile mindestens eines Emulgators und 0,05 bis 1 Gew.-Teil mindestens eines Initiators. Geeignete Emulgatoren und Initiatoren sind weiter oben unter Verfahrensschritt a) genannt. Die Glasumwandlungstemperatur (Tg) eines Polymeren, das aus einer Mischung von aromatischem Vinylmonomer und Acrylsäurealkylester, wie sie im Verfahrensschritt b) angewendet wird, erzeugt würde, läge in der Regel über +30 °C.

Nach Beendigung der Zugabe der unter Verfahrensschritt b) genannten Stoffe wird zweckmäßig noch 5 bis 30 Minuten weitergerührt und dann der Verfahrensschritt c) durchgeführt, für den analog dem Verfahrensschritt b) mindestens ein Acrylsäurealkylester, mindestens ein vernetzend wirkendes Monomeres und erfindungsgemäß als aromatische Vinylverbindung bevorzugt α-Methylstyrol und insbesondere Styrol eingesetzt werden, jedoch ein anderes Mischungsverhältnis von aromatischer Vinylverbindung zu Acrylsäurealkylester angewendet wird. Die Polymerisation wird in wäßriger Emulsion in Gegenwart mindestens eines Emulgators und mindestens eines wasserlöslichen, radikalisch zerfallenden Initiators unter Rühren bei 50 bis 90 °C, vorzugsweise bei 60 bis 80 °C, zweckmäßig bei normalem Atmosphärendruck, fortgeführt. Wie beim Verfahrensschritt b) können hierbei sowohl die Monomerenmischung als auch der Emulgator sowie der Initiator, letztere beiden zweckmäßig als wäßrige Lösung, jedes für sich in getrennten Strömen zugegben werden. Vorteilhaft erzeugt man zuerst aus der Monomerenmischung und der wäßrigen Emulgatorlösung durch Rühren eine Monomeremulsion in Wasser und gibt diese sowie die wäßrige Lösung des Initiators in getrennten Strömen kontinuierlich oder portionsweise zur Polymerdispersion, die nach den Verfahrensschritten a) und b) erzeugt wurde.

Geeignete Acrylsäurealkylester und vernetzend wirkende Monomere sind unter Verfahrensschritt b), geeignete Emulgatoren und Initiatoren unter Verfahrensschritt a) angegeben.

Für den Verfahrensschritt c) werden folgende Stoffmengen eingesetzt:
25 bis 60 Gew.-Teile einer Mischung, die auf 1 Gew.-Teil eines oder mehrerer Acrylsäurealkylester 0,2 bis 1,4 Gew.-Teile, vorzugsweise 0,3 bis 1 Gew.-Teile, von einer oder mehreren aromatischen Vinylverbindung(en) enthält; 0,1 bis 1,4 Gew.-Teile mindestens eines vernetzend wirkenden Monomeren sowie je 100 Gew.-Teile Monomerenmischung: 40 bis 120 Gew.-Teile Wasser; 0,8 bis 8 Gew.-Teile mindestens eines Emulgators und 0,05 bis 1 Gew.-Teil mindestens eines Initiators. Die Glasumwandlungstemperatur (Tg) eines Polymeren, das aus einer Mischung von aromatischem Vinylmonomer und Acrylsäurealkylester, wie sie im Verfahrensschritt c) angewendet wird, erzeugt würde, läge in der Regel unter -10 °C.

Nach Beendigung der Zugabe der unter Verfahrensschritt c) genannten Stoffe wird zweckmäßig noch 15 bis 60 Minuten weitergerührt und danach, falls erforderlich, auf Raumtemperatur abgekühlt und die so erzeugte Polymerisatdispersion für den Verfahrensschritt d) verwendet.

In einer bevorzugten Ausführungsform werden nach Beendigung der Zugabe der unter Verfahrensschritt c) genannten Stoffe der erzeugten wäßrigen Polymerisatdispersion je 100 Gew.-Teile insgesamt eingesetzte Monomere; 0,01 bis 0,5 Gew.-Teile von mindestens einem wasserlöslichen, radikalisch zerfallendem Initiator zweckmäßig in wäßriger Lösung zugesetzt und bei einer Temperatur von 50 bis 90 °C, vorzugsweise 60 bis 80 °C, während 0,5 bis 4 Stunden weitergerührt und erst danach für den Verfahrensschritt d) verwendet.

Wegen der einfacheren Durchführbarkeit wird in den Verfahrensschritten a), b) und c) vorteilhaft jeweils mit dem(den)selben Initiator(en) und Emulgator(en) gearbeitet, die Qualität der erzeugten )Polymerisat-Dispersion wird dadurch im allgemeinen nicht negativ beeinflußt.

Das durch die Verfahrensschritte a) bis c) erzeugte Polymere soll x) 41 bis 76 Gew.-% aromatische Vinylverbindung, y) 24 bis 59 Gew.-% Acrylsäurealkylester und z) 0,2 bis 4 Gew.-% vernetzende(s) Monomere(s), jeweils bezogen auf das Polymere, in polymerisierter Form enthalten, mit der Maßgabe, daß x + y + z = 100 % ist. Es soll ferner zweckmäßig eine zahlenmittlere Teilchengröße (beispielsweise gemessen mit der Photoelektronen-Korrelations-Spektroskopie) von 80 bis 300 nm, vorzugsweise von 100 bis 200 nm, aufweisen. Es weist eine besonders enge Teilchengrößen-Verteilung auf.

Der Verfahrensschritt d) wird wie folgt durchgeführt:

5 bis 30 Gew.-Teile des gemäß der Verfahrensschritte a) bis c) hergestellten Polymeren wird in Form der erzeugten wäßrigen Polymerisat-Dispersion mit 95 bis 70 Gew.-Teilen Vinylchlorid oder einem Monomerengemisch, das überwiegend Vinylchlorid enthält, in wäßriger Suspension polymerisiert.

In einer bevorzugten Ausführungsform wird erfindungsgemäß so vorgegangen, daß Wasser, Suspendiermittel, Fällungsmittel für die weiter oben beschriebenen Emulgatoren, Katalysatoren, gegebenenfalls weitere Zusatzstoffe sowie Vinylchlorid und gegebenenfalls weitere Monomere, die mit Vinylchlorid copolymerisierbar sind, im Polymerisationsgefäß vorgelegt werden und danach die, wie oben beschrieben, hergestellte wäßrige Dispersion des Polyacrylsäureesters unter Bewegung der Mischung, beispielsweise durch Rühren, zugegeben wird. Hierbei kann die Reihenfolge, in der das Vinylchlorid beziehungsweise das Vinylchlorid enthaltende Monomerengemisch, das Wasser, Suspendiermittel, Fällungsmittel und der Katalysator eingespeist werden, variieren, in jedem Fall soll jedoch als letztes die wäßrige Polyacrylsäuredispersion zugegeben werden. Vor, während oder nach dieser Zugabe wird die Mischung auf die Polymerisationstemperatur von 50 bis 80 °C erwärmt und wie üblich unter Rühren bis zu einem Druckabfall um mindestens 0,1 MPa polymerisiert. Der Polymerisationsumsatz sollte 45 bis 95 Gew.-%, vorzugsweise 75 bis 90 Gew.-%, bezogen auf eingesetztes Vinylchloridmonomeres, betragen.

Bei der Suspensionspolymerisation wird zweckmäßig auf 1 Gew.-Teil Vinylchlorid beziehungsweise vinylchloridhaltiges Monomerengemisch 0,8 bis 5 Gew.-Teile, vorzugsweise 1,2 bis 3 Gew.-Teile, Wasser verwendet, wobei die später zugefügte Polyacrylsäureester-Dispersion nicht berücksichtigt wird.

Neben Vinylchlorid können bei der Suspensionspolymerisation bis zu 10 Gew.-% der Gesamtmenge der eingesetzten Monomeren mit Vinylchlorid copolymerisierbarer Monomerer angewendet werden. Hierfür sind beispielsweise eines oder mehrere folgender Monomerer geeignet: Vinylester von geradkettigen oder verzweigten Carbonsäuren mit 2 bis 20, vorzugsweise 2 bis 4 Kohlenstoffatomen, wie Vinylacetat, -propionat, -butyrat, -2-ethylhexoat; Vinylisotridecansäureester; Vinylidenchlorid; Vinylether, ungesättigte Säuren, wie Malein-, Fumar-, Acryl-, Methacrylsäure und deren Monobeziehungsweise Diester mit aliphatischen Alkoholen mit 1 bis 10 Kohlenstoffatomen; Maleinsäureanhydrid, Maleinsäureimid sowie dessen N-Substitutionsprodukte mit aromatischen, cycloaliphatischen sowie gegebenenfalls verzweigten aliphatischen Substituenten; Acrylnitril. Besonders bevorzugt als Comonomere sind Vinylacetat und Methacrylsäureester mit 1 bis 8 C-Atomen in der alkoholischen Komponente.

Als Suspendiermittel werden 0,05 bis 1 Gew.-%, vorzugsweise 0,1 bis 0,5 Gew.-%, bezogen auf das (die) bei der Suspensionspolymerisation eingesetzte(n) Monomere(n) verwendet. Geeignet sind eines oder mehrere der folgenden Suspendiermittel: Cellulosederivate, wie Alkyl- und Hydroxyalkylcellulosen, beispielsweise Methyl- oder Ethylcellulose sowie Hydroxyethyl- oder Hydroxypropylcellulose sowie deren Mischether, wie Hydroxypropylmethylcellulose; Alkylvinylethermaleinsäurecopolymerisate; teilweise vernetzte Polyacrylsäure; Gelatine; Stärkeether. Bevorzugt wird als Suspendiermittel mindestens die Hälfte der insgesamt einzusetzenden Suspendiermittelmenge von mindestens einem Polyvinylalkohol, der 5 bis 23 Gew.-% Acetatgruppen enthält sowie, gemessen in 4gew.%iger wäßriger Lösung bei 20 °C, eine Viskosität von 4 bis 40 mPa · s aufweist, eingesetzt, wobei der pH-Wert der vor der Polymerisation erzeugten Mischung aus Wasser, Suspendiermittel und Fällungsmittel für die bei der Emulsionpolymerisation des Acrylsäurealkylesters eingesetzten Emulgatoren auf einen Wert unterhalb 9 eingestellt wird.

Die Suspensionspolymerisation wird in Gegenwart von 0,001 bis 3 Gew.-%, vorzugsweise 0,01 bis 0,3 Gew.-%, bezogen auf eingesetzte(s) Monomere(s), in Vinylchlorid löslicher radikalbildender Katalysatoren durchgeführt. Geeignete Katalysatoren sind beispielsweise Diaryl-, Diacylperoxide, wie Diacetyl-, Acetylbenzoyl-, Dilauroyl-, Dibenzoyl-, Bis-2,4-dichlorbenzoyl-, Bis-2-methylbenzoylperoxid; Dialkylperoxide, wie Di-tertiär-butylperoxid, Perester, wie Tertiär-butylpercarbonat, Tertiär-butylperacetat, Tertiär-butylperoctoat, Tertiär-butylperpivalat; Dialkylperoxydicarbonate, wie Diisopropyl-, Diethylhexyl-, Dicyclohexyl-, Diethylcyclohexylperoxy-dicarbonate; gemischte Anhydride von organischen Sulfopersäuren und organischen Säuren, wie Acetylcyclohexylsulfonylperoxid; als Polymerisationskatalysatoren bekannte Azoverbindungen, wie Azoisobuttersäurenitril.

Die in einer bevorzugten Ausführungsform des neuen Verfahrens verwendeten Fällungsmittel für die bei der Emulsionspolymerisation des Acrylsäurealkylesters verwendeten Emulgatoren sind beispielsweise Salze von mehrwertigen Metallkationen geeignet. Vorzugsweise wird als Fällungsmittel für die Emulgatoren mindestens ein wasserlösliches Erdalkali oder Aluminiumsalz eingesetzt, wobei der pH-Wert der vor der Polymerisation erzeugten Mischung aus Wasser, Suspendiermittel und Fällungsmittel oberhalb 2 so eingestellt wird, daß das Fällungsmittel keine merkliche Hydrolyse zeigt. Beispiele für geeignete bevorzugte Fällungsmittel sind Magnesiumsulfat, Calciumchlorid, Calciumsulfat, Calciumacetat, Calciumnitrat, Bariumchlorid, Bariumnitrat, Aluminiumchlorid und Kaliumaluminiumsulfat (Alaun). Von den Fällungsmitteln werden mindestens soviel eingesetzt, wie zur vollständigen Ausfällung der verwendeten Emulgatoren notwendig ist, zweckmäßig wird ein geringer Überschuß verwendet. In der Regel werden vorteilhaft je 100 Gew.-Teile des nach den Verfahrensschritten a) bis c) hergestellten Polymerisates 0,5 bis 5 Gew.-Teile des Fällungsmittel bei der Polymerisation nach Verfahrensschritt d) eingesetzt.

Wenn bei der oben beschriebenen Suspensionspolymerisation von Vinylchlorid in Gegenwart der nach den Verfahrensschritten a) bis c) erzeugten Dispersion der gewünschte Monomerenumsatz erreicht ist, wird der Ansatz abgekühlt, nach üblichen Verfahren von restlichen Monomeren befreit, die wäßrige Flotte, beispielsweise in einer Dekanterzentrifuge, abgetrennt und das feuchte Polymerisat wie üblich, beispielsweise in einem Stromtrockner oder Wirbelbetttrockner, getrocknet.

Das erfindungsgemäß hergestellte Polymerisat wird als solches oder in Mischung mit Vinylchloridhomo- und/oder -copolymerisaten, die neben polymerisierten Vinylchlorideinheiten bis zu 10 Gew.-% polymerisierte Einheiten von Comonomeren enthalten, unter Zusatz üblicher Verarbeitungshilfsmittel, wie Thermostabilisatoren, Gleitmittel, gegebenenfalls Farbstoffe, Pigmente und andere Zusatzstoffe durch Extrudieren, Kalandrieren im Spritzgußverfahren oder nach anderen bekannten Verarbeitungsverfahren zu Formkörpern verarbeitet. Die Mischung der verschiedenen Polymerisate wird dabei zweckmäßig so eingestellt, daß sie 2,5 bis 10 Gew.-%, bevorzugt 4 bis 7 Gew.-%, des in dem erfindungsgemäß hergestellten Polymerisat enthaltenen Acrylsäureester-Polymerisatanteils aufweist.

Wie eingangs bereits erwähnt, ermöglicht es das erfindungsgemäße Verfahren, ohne aufwendige Zwischenbehandlung von Vorpolymerisaten überwiegend polymerisiertes Vinylchlorid enthaltende Polymerisat zu erzeugen, die zu Formkörpern mit guter Schlagzähigkeit auch bei niedrigen Temperaturen und verbesserter Transparenz verarbeitet werden können.

Beispiele

Nachfolgende Ausführungsbeispiele sollen die Erfindung näher erläutern. Die angegebenen Eigenschaftswerte wurden wie folgt ermittelt:

Schüttgewicht: Nach DIN 53 468
Weichmacheraufnahme: Nach DIN 53 417
Schlagzähigkeit: Nach DIN 53 453 mit gekerbtem Probekörper bei 23 °C ($aK_{23}$) und bei 0 °C ($aK_0$)

Transparenz charakterisiert durch die Lichtdurchlässigkeit (Ld) in % und das Streulicht in Durchstrahlungsrichtung (Str) in % nach folgender Methode: Das Licht einer mit konstanter Spannung betriebenen Glühlampe wird vermittels eines Kollektors auf eine Blende mit senkrechtem Spalt konzentriert. Dieser Lichtspalt wird vermittels einer Optik durch eine Öffnung in eine Ulbricht'sche Kugel projiziert, die gegenüber der Lichteintrittsöffnung eine sogenannte "Lichtfalle" enthält und an der senkrecht zur Durchstrahlungsrichtung in einer Öffnung eine Fotozelle angebracht ist. Der von der Fotozelle bei Lichteinfall erzeugte elektrische Strom wird nach Verstärkung mit einem Drehspul-Instrument gemessen. An der Lichteintrittsöffnung der Ulbricht'schen Kugel ist ein Probenhalter für Proben von 10 x 10 cm und eine senkrechte Achse angebracht, um die die Ulbricht'sche Kugel aus ihrer Ruhelage seitwärts um einen gewissen Winkel geschwenkt werden kann, so daß das Bild des Lichtspaltes nicht mehr in die "Lichtfalle" fällt, sondern daneben auf die gleichmäßig reflektierende Innenoberfläche der Ulbricht'schen Kugel. Diese Stellung wird nachfolgend als "hell" bezeichnet, die Stellung, bei der das Bild des Spaltes in die Lichtfalle fällt, als "dunkel".

Zur Messung der Lichtdurchlässigkeit (Ld) wird die Ulbricht'sche Kugel in Stellung "hell" geschwenkt und so das Gesamtlicht ohne Probe G durch Messung am Drehspul-Instrument ermittelt. Nun wird als Probe eine durch Pressen erzeugte planparallele Platte von den Abmessungen 10 x 10 cm mit 10 mm Dicke in den Probenhalter an der Lichteintrittsöffnung der Ulbricht'schen Kugel gebracht und das Gesamtlicht mit Probe $G_p$ gemessen. Diese Messung wird an drei verschiedenen Platten, die alle mit dem gleichen Rohstoff und dem gleichen Rezept erzeugt wurden, durchgeführt und der Mittelwert aller drei Messungen für die Errechnung der Lichtdurchlässigkeit nach folgender Gleichung verwendet:

$$Ld = \frac{G_p \times 100}{G} \, [\%]$$

Zur Messung des Streulichtes (Str) wird die Ulbricht'sche Kugel in Stellung "dunkel" geschwenkt und zunächst ohne Probe das an der Apparatur gestreute Licht S durch Ablesen des Drehspul-Instrumentes festgestellt. Nun werden die gleichen drei Proben wie oben nacheinander in den Probenhalter an der Lichteintrittsöffnung der Ulbricht'schen Kugel gebracht und das in Durchstrahlungsrichtung gestreute Licht mit Probe $S_P$ bestimmt. Das Streulicht (Str), bezogen auf das von der Probe durchgelassene Licht, ist:

$$Str = \frac{S_p}{G_p} - \frac{S}{G} \times 100 \, [\%]$$

Die als Proben hergestellten Preßplatten werden wie folgt erzeugt:

| | |
|---|---|
| 100 Gew.-Teile | Polymerisat beziehungsweise Polymerisat-Mischung |
| 2 Gew.-Teile | eines Barium-Kadmium-Stabilisators (Lankromark® LP der Firma Lankro, Drogenbos/ Belgien) |
| 0,5 Gew.-Teile | Alkylarylphosphit (Typ LE 98 der Firma Lankro) |
| 2 Gew.-Teile | eines epoxidierten Sojabohnenöls (Edenol® D81 der Firma Henkel, Loxstedt/Bundesrepublik Deutschland) |
| 0,5 Gew.-Teile | eines Kohlenwasserstoffwachses (Irganox® 366 der Firma Ciba Geigy, Marienburg/Bundesrepublik Deutschland) |

werden sorgfältig miteinander vermischt, dann werden 5 Minuten bei 175 °C 0,3 mm starke Felle durch Walzen daraus hergestellt. Vier dieser Walzfelle werden übereinandergelegt und in einer Presse zwischen hochglanzverchromten Blechen bei 175 °C zu einer 1 mm starken Platte gepreßt, aus der anschließend das Probenstück mit den Abmessungen 10 x 10 cm herausgeschnitten wird. Die ermittelten Meßwerten sind nachfolgend in einer Tabelle aufgeführt.

Beispiel 1

a) In einen Behälter aus rostfreiem Edelstahl, der mit einem heiz- oder kühlbaren Doppelmantel und einem Rührer ausgerüstet ist, werden vorgelegt:

| | |
|---|---|
| 51,5 Gew.-Teile | entsalztes Wasser, |
| 0,75 Gew.-Teile | 2-Ethylhexylacrylat und |
| 0,16 Gew.-Teile | Natriumdodecylbenzolsulfonat, das sind 0,21 Gew.-Teile je 1 Gew.-Teil eingesetztes Monomeres. |

Die Mischung wird unter Rühren auf 70 °C erwärmt und

| | |
|---|---|
| 0,25 Gew.-Teile | Kaliumpersulfat, das sind 0,34 Gew.-Teile je 1 Gew.-Teil eingesetztes Monomeres, gelöst in |
| 2,5 Gew.-Teilen | entsalztem Wasser |

zugesetzt, worauf die Polymerisation mit deutlicher Wärmeabgabe beginnt. Nach 30 Minuten werden

b) innerhalb von weiteren 2 Stunden kontinuierlich in getrennten Strömen unter Fortsetzung des Rührens bei 70 °C zugegeben: Eine wäßrige Dispersion, die enthält:

| | |
|---|---|
| 52,5 Gew.-Teile | Styrol, |
| 20 Gew.-Teile | 2-Ethylhexylacrylat, |
| 0,5 Gew.-Teile | Allylmethacrylat, |
| 1,65 Gew.-Teile | Natriumdodecylbenzolsulfonat, das sind 2,26 Gew.-Teile je 100 Gew.-Teile der Monomeren-Mischung, |
| 34,5 Gew.-Teile | entsalztes Wasser, |

außerdem eine Lösung, die enthält:

| 0,5 Gew.-Teile | Kaliumpersulfat, das sind 0,68 Gew.-Teile je 100 Gew.-Teile der Monomeren-Mischung, und |
| 4,5 Gew.-Teile | entsalztes Wasser. - Die Gesamtmenge (39 Gew.-Teile) Wasser sind 53,4 Gew.-Teile je 100 Gew.-Teile der Monomeren-Mischung. - Auf 1 Gew.-Teil Acrylsäurealkylester werden 2,63 Gew.-Teile Styrol verwendet. |

Nach Ablauf der 2 Stunden wird noch 15 Minuten ohne Zugabe weitergerührt und dann

c) innerhalb von weiteren 2 Stunden kontinuierlich in getrennten Strömen, wie unter b) beschrieben, zugegeben: Eine wäßrige Dispersion, die enthält:

| 19 Gew.-Teile | Styrol, |
| 31 Gew.-Teile | 2-Ethylhexylacrylat, |
| 1,25 Gew.-Teile | Allylmethacrylat, |
| 1 Gew.-Teil | Natriumdodecylbenzolsulfonat, das sind 2 Gew.-Teile je 100 Gew.-Teile der Monomeren-Mischung, und |
| 23 Gew.-Teile | entsalztes Wasser; |

außerdem eine Lösung, die enthält:

| 0,3 Gew.-Teile | Kaliumpersulfat, das sind 0,6 Gew.-Teile je 100 Gew.-Teile der Monomeren-Mischung, und |
| 3 Gew.-Teile | entsalztes Wasser. - Die Gesamtmenge (26 Gew.-Teile) Wasser sind 50,7 Gew.-Teile je 100 Gew.-Teile der Monomeren-Mischung. - Auf 1 Gew.-Teil Acrylsäurealkylester werden 0,61 Gew.-Teile Styrol verwendet. |

Nach Beendigung der Zugabe wird innerhalb weiterer 2 Stunden unter Fortsetzung des Rührens bei 70 °C eine Lösung zugegeben, die enthält:

| 0,4 Gew.-Teile | Kaliumpersulfat, das sind 0,3 Gew.-Teile je 100 Gew.-Teile der insgesamt während der Verfahrensschritte a) bis c) verwendeten Monomeren, und |
| 3,5 Gew.-Teile | entsalztes Wasser. |

Die so erzeugte wäßrige Polymerdispersion hat einen Polymergehalt von 49,7 Gew.-%, bezogen auf die Dispersion. Das Polymere enthält (jeweils bezogen auf das Polymere):

| 57,2 Gew.-% | Styrol-Einheiten, |
| 41,4 Gew.-% | 2-Ethylhexylacrylat-Einheiten und |
| 1,4 Gew.-% | Allylmethacrylat-Einheiten. |

Es hat eine zahlenmittlere Teilchengröße von 130 nm. Der Monomerumsatz ist praktisch 100 %.

d) In einem druckfesten Polymerisationskessel aus rostfreiem Edelstahl, der mit einem heiz- oder kühlbaren Doppelmantel und einem Rührer ausgerüstst ist, werden vorgelegt:

| 475 Gew.-Teile | entsalztes Wasser, das sind 1,9 Gew.-Teile je 1 Gew.-Teil Vinylchlorid-Monomeres, |
| 0,3 Gew.-Teile | teilacetylierter Polyvinylalkohol, der 14 Gew.-% Acetatgruppen enthält, und dessen 4gew.%ige wäßrige Lösung bei 20 °C eine Viskosität von 15 mPa · s aufweist, |
| 0,13 Gew.-Teile | Hydroxypropylmethylcellulose, deren 2gew.%ige wäßrige Lösung bei 20 °C eine Viskosität von 50 mPa · s aufweist, das sind zusammen 0,17 Gew.-% Suspendiermittel, bezogen auf Vinylchlorid, |
| 0,2 Gew.-Teile | Lauroylperoxid, das sind 0,08 Gew.-%, bezogen auf Vinylchlorid, und |
| 0,4 Gew.-Teile | Calciumnitrat als Fällungsmittel, das sind 1,5 Gew.-Teile je 100 Gew.-Teile eingesetztes, nach den Verfahrensschritten a) bis c) erzeugtes Polymerisat. |

Der Polymerisationskessel wird nun geschlossen, der darin enthaltene Luftsauerstoff verdrängt und unter Rühren zugegeben:

| 250 Gew.-Teile | Vinylchlorid und danach |
| 54,5 Gew.-Teile | der nach den Verfahrensschritten a) bis c) erzeugten Dispersion, die 27 Gew.-Teile Polymeres enthält. |

Nun wird unter Fortsetzung des Rührens der Kesselinhalt auf 67 °C erwärmt und bei dieser Temperatur bis zu einem Vinylchlorid-Restdruck von 0,5 MPa polymerisiert, dann abgekühlt, die Suspension nach üblichem Verfahren von restlichem, monomerem Vinylchlorid und von der Hauptmenge der wäßrigen Phase befreit, das feuchte Polymere getrocknet. Es werden 9,7 Gew.-Teile Polymeres [nach den Verfahrensschritten a) bis c) hergestellt] auf 90,3 Gew.-Teile Vinylchlorid eingesetzt.

Der Umsatz des Vinylchlorids beträgt 85 %. Das nach den Verfahrensschritten a) bis d) erzeugte Pfropfpolymerisat enthält 4,7 Gew.-% polymerisierte Acrylsäurealkylester-Einheiten.

Aus dem so erhaltenen Pfropfpolymerisat werden Preßplatten von 10 mm Stärke hergestellt und daran, wie auch am Polymerisatpulver selbst, die in nachstehender Tabelle aufgeführten Werte gemessen.

Beispiel 2

Es wird analog verfahren, wie in Beispiel 1 beschrieben, jedoch werden folgende Stoffmengen und Verfahrensparameter verwendet:

a)

| | |
|---|---|
| 77,5 Gew.-Teile | entsalztes Wasser, |
| 1 Gew.-Teil | n-Butylacrylat, |
| 0,005 Gew.-Teile | Diallylphthalat, das sind 0,5 Gew.-Teile je 100 Gew.-Teile eingesetztes Monomeres, und |
| 0,2 Gew.-Teile | Natriumdodecylsulfonat, das sind 0,2 Gew.-Teile je 1 Gew.-Teil eingesetztes Monomeres. |

Die Mischung wird unter Rühren auf 60 °C erwärmt und

| | |
|---|---|
| 0,035 Gew.-Teile | Wasserstoffperoxid, das sind 0,035 Gew.-Teile je 1 Gew.-Teil eingesetztes Monomeres, gelöst in |
| 0,5 Gew.-Teilen | entsalztem Wasser und |
| 0,1 Gew.-Teilen | Ascorbinsäure, gelöst in |
| 1 Gew.-Teil | entsalztem Wasser |

zugesetzt. Nach 15 Minuten werden

b) innerhalb von weiteren 1,5 Stunden kontinuierlich in getrennten Strömen unter Rühren bei 60 °C zugegeben: Eine wäßrige Dispersion, die enthält:

| | |
|---|---|
| 39 Gew.-Teile | Styrol, |
| 9 Gew.-Teile | n-Butylacrylat, |
| 0,4 Gew.-Teile | Diallylphthalat, |
| 1,2 Gew.-Teile | Natriumdodecylsulfonat, das sind 2,48 Gew.-Teile je 100 Gew.-Teile der Monomeren-Mischung, und |
| 45 Gew.-Teile | entsalztes Wasser; |

außerdem eine Lösung, die enthält:

| | |
|---|---|
| 0,07 Gew.-Teile | Wasserstoffperoxid, das sind 0,14 Gew.-Teile je 100 Gew.-Teile der Monomeren-Mischung, gelöst in |
| 1 Gew.-Teil | entsalztem Wasser und |
| 0,1 Gew.-Teilen | Ascorbinsäure, gelöst in |
| 1 Gew.-Teil | entsalztem Wasser. - Die Gesamtmenge (47 Gew.-Teile) Wasser sind 97,1 Gew.-Teile je 100 Gew.-Teile der Monomeren-Mischung. - Auf 1 Gew.-Teil Acrylsäurealkylester werden 4,3 Gew.-Teile Styrol verwendet. |

Nach Ablauf von 1,5 Stunden wird noch 10 Minuten ohne Zugabe weitergerührt und dann

c) innerhalb von weiteren 2 Stunden kontinuierlich in getrennten Strömen, wie unter b) beschrieben, zugegeben: Eine wäßrige Dispersion, die enthält:

| | |
|---|---|
| 9,5 Gew.-Teile | Styrol, |
| 29,5 Gew.-Teile | 2-Ethylhexylacrylat, |
| 0,25 Gew.-Teile | Diallylphthalat, |
| 0,8 Gew.-Teile | Natriumdodecylsulfonat, das sind 2 Gew.-Teile je 100 Gew.-Teile der Monomeren-Mischung, und |
| 32 Gew.-Teile | entsalztes Wasser; |

außerdem eine Lösung, die enthält:

| | |
|---|---|
| 0,06 Gew.-Teile | Wasserstoffperoxid, das sind 0,15 Gew.-Teile je 100 Gew.-Teile der Monomeren-Mischung, gelöst in |
| 0,6 Gew.-Teilen | entsalztem Wasser und |
| 0,09 Gew.-Teilen | Ascorbinsäure, gelöst in |
| 0,9 Gew.-Teilen | entsalztem Wasser. - Die Gesamtmenge (33,5 Gew.-Teile) Wasser sind 85,4 Gew.-Teile je 100 Gew.-Teile der Monomeren-Mischung. - Auf 1 Gew.-Teil Acrylsäurealkylester werden 0,32 Gew.-Teile Styrol verwendet. |

Nach Beendigung der Zugabe wird innerhalb weiterer 2 Stunden unter Fortsetzung des Rührens bei 60 °C eine Lösung zugegeben, die enthält:

| | |
|---|---|
| 0,05 Gew.-Teile | Wasserstoffperoxid, das sind 0,06 Gew.-Teile je 100 Gew.-Teile der insgesamt während der Verfahrensschritte a) bis c) verwendeten Monomeren, gelöst in |
| 0,5 Gew.-Teilen | entsalztem Wasser und |
| 0,1 Gew.-Teilen | Ascorbinsäure, gelöst in |
| 1 Gew.-Teil | entsalztem Wasser. |

Die so erzeugte wäßrige Polymerdispersion hat einen Polymergehalt von 35,15 Gew.-%, bezogen auf die Dispersion. Das Polymere enthält (jeweils bezogen auf das Polymere):

54,8 Gew.-% Styrol-Einheiten,

44,5 Gew.-% Acrylsäurealkylester-Einheiten und

0,7 Gew.-% Diallylphthalat-Einheiten,

Es hat eine zahlenmittlere Teilchengröße von 105 nm. Der Monomerumsatz ist praktisch 100 %.

d) In einer Apparatur, wie in Beispiel 1 beschrieben, werden vorgelegt:

600 Gew.-Teile entsalztes Wasser, das sind 2,4 Gew.-Teile je 1 Gew.-Teil Vinylchlorid-Monomeres,

0,62 Gew.-Teile einer teilweise vernetzten Polyacrylsäure, die durch Copolymerisation von 100 Gew.-Teilen Acrylsäure mit 2 Gew.-Teilen Ethylenglykoldiacrylat hergestellt wurde, als Suspendiermittel,

0,13 Gew.-Teile eines teilweise verseiften Polyvinylacetates, das 31 Gew.-% Acetatgruppen enthält, als 40gew.%ige Dispersion in Wasser, das sind zusammen 0,3 Gew.-% Suspendiermittel, bezogen auf Vinylchlorid,

0,15 Gew.-Teile 2,2-Dimethylbenzoylperoxid, das sind 0,06 Gew.-%, bezogen auf Vinylchlorid, und

0,45 Gew.-Teile Magnesiumsulfat als Fällungsmittel, das sind 1,7 Gew.-Teile je 100 Gew.-Teile eingesetztes, nach den Verfahrensschritten a) bis c) erzeugtes Polymerisat.

Nach Verdrängung der Luft aus dem Polymerisationskessel werden unter Rühren zugegeben:

250 Gew.-Teile Vinylchlorid und danach

75,5 Gew.-Teile der nach den Verfahrensschritten a) bis c) erzeugten Dispersion, die 26,5 Gew.-Teile Polymeres enthält.

Nun wird unter Fortsetzung des Rührens der Kesselinhalt auf 67 °C erwärmt und bei dieser Temperatur bis zu einem Vinylchlorid-Restdruck von 0,5 MPa polymerisiert, dann aufgearbeitet, wie in Beispiel 1 beschrieben.

Es werden 9,6 Gew.-Teile Polymeres [nach den Verfahrensschritten a) bis c) hergestellt] auf 90,4 Gew.-Teile Vinylchlorid eingesetzt.

Der Umsatz des Vinylchlorids beträgt 89 %. Das nach den Verfahrensschritten a) bis d) erzeugte Pfropfpolymerisat enthält 4,7 Gew.-% polymerisierte Acrylsäurealkylester-Einheiten.

Es wird weiterbehandelt, wie in Beispiel 1 beschrieben, die gemessenen Werte sind in nachfolgender Tabelle aufgeführt.

Beispiel 3

In einem Behälter aus rostfreiem Edelstahl, der mit einem Rührer ausgestattet ist, wird eine Emulsion aus folgenden Bestandteilen erzeugt:

48,25 Gew.-Teile Styrol,

13,25 Gew.-Teile 2-Ethylhexylacrylat,

0,5 Gew.-Teile Diallylphthalat,

1,63 Gew.-Teile Natriumdodecylbenzolsulfonat, und

33,77 Gew.-Teile entsalztes Wasser.

1,15 Gew.-Teile dieser Emulsion werden zur Durchführung des Verfahrensschrittes a), die Hauptmenge (96,25 Gew.-Teile) zur Durchführung des Verfahrensschrittes b) eingesetzt.

a) In einen Behälter aus rostfreiem Edelstahl, der mit einem heiz- oder kühlbaren Doppelmantel und einem Rührer ausgerüstet ist, werden vorgelegt:

79,9 Gew.-Teile entsalztes Wasser,

0,16 Gew.-Teile Natriumdodecylbenzolsulfonat und 1,15 Gew.-Teile der eingangs beschriebenen Emulsion, diese enthalten:

0,02 Gew.-Teile Natriumdodecylbenzolsulfonat zusammen 0,18 Gew.-Teile, das sind 0,25 Gew.-Teile je 1 Gew.-Teil eingesetztes Monomeres,

0,57 Gew.-Teile Styrol

0,16 Gew.-Teile 2-Ethylhexylacrylat, zusammen 0,73 Gew.-Teile Monomeres

0,006 Gew.-Teile Diallylphthalat, das sind 0,5 Gew.-Teile je 100 Gew.-Teile Monomeres, und

0,4 Gew.-Teile entsalztes Wasser, zusammen 80,3 Gew.-Teile Wasser.

Die Mischung wird unter Rühren auf 80 °C erwärmt, dann werden 0,16 Gew.-Teile Kaliumpersulfat, das sind 0,22 Gew.-Teile je 1 Gew.-Teil Monomeres zugesetzt, worauf die Polymerisation mit deutlicher Wärmeabgabe beginnt. Nach 20 Minuten werden

b) innerhalb von weiteren 2 Stunden kontinuierlich und in getrennten Strömen unter Fortsetzung des Rührens bei 80 °C zugegeben: Die Hauptmenge (96,25 Gew.-Teile) der oben beschriebenen Emulsion, die enthält:

| | |
|---|---|
| 47,7 Gew.-Teile | Styrol, |
| 13,1 Gew.-Teile | 2-Ethylhexylacrylat, |
| 0,5 Gew.-Teile | Diallylphthalat, |
| 1,6 Gew.-Teile | Natriumdodecylbenzolsulfonat, das sind 2,6 Gew.-Teile je 100 Gew.-Teile der Monomeren-Mischung, |
| 33,4 Gew.-Teile | entsalztes Wasser, |

außerdem eine Lösung, die enthält:

| | |
|---|---|
| 0,2 Gew.-Teile | Kaliumpersulfat, das sind 0,33 Gew.-Teile je 100 Gew.-Teile der Monomeren-Mischung, und |
| 1,8 Gew.-Teile | entsalztes Wasser. - Die Gesamtmenge (35,2 Gew.-Teile) Wasser sind 57 Gew.-Teile je 100 Gew.-Teile der Monomeren-Mischung. - Auf 1 Gew.-Teil Acrylsäurealkylester werden 3,64 Gew.-Teile Styrol verwendet. |

Nach Ablauf der 2 Stunden wird noch 15 Minuten ohne Zugabe weitergerührt und dann

c) innerhalb von weiteren 2 Stunden kontinuierlich in getrennten Strömen, wie unter b) beschrieben, zugegeben: Eine wäßrige Dispersion, die enthält:

| | |
|---|---|
| 10,4 Gew.-Teile | Styrol, |
| 31,1 Gew.-Teile | 2-Ethylhexylacrylat, |
| 0,83 Gew.-Teile | Diallylphthalat, |
| 1,05 Gew.-Teile | Natriumdodecylbenzolsulfonat, das sind 2,5 Gew.-Teile je 100 Gew.-Teile der Monomeren-Mischung, und |
| 18,7 Gew.-Teile | entsalztes Wasser; |

außerdem eine Lösung, die enthält:

| | |
|---|---|
| 0,12 Gew.-Teile | Kaliumpersulfat, das sind 0,28 Gew.-Teile je 100 Gew.-Teile der Monomeren-Mischung, |
| 1,1 Gew.-Teile | entsalztes Wasser. - Die Gesamtmenge (19,8 Gew.-Teile) Wasser sind 47 Gew.-Teile je 100 Gew.-Teile der Monomeren-Mischung. - Auf 1 Gew.-Teil Acrylsäurealkylester werden 0,33 Gew.-Teile Styrol verwendet. |

Nach Beendigung der Zugabe wird innerhalb weiterer 2 Stunden unter Fortsetzung des Rührens bei 80 °C eine Lösung zugegeben, die enthält:

| | |
|---|---|
| 0,31 Gew.-Teile | Kaliumpersulfat, das sind 0,3 Gew.-Teile je 100 Gew.-Teile der insgesamt während der Verfahrensschritte a) bis c) verwendeten Monomeren, und |
| 2,8 Gew.-Teile | entsalztes Wasser. |

Die so erzeugte wäßrige Polymerdispersion hat einen Polymergehalt von 41,6 Gew.-%, bezogen auf die Dispersion. Das Polymere enthält (jeweils bezogen auf das Polymere):

| | |
|---|---|
| 56,2 Gew.-% | Styrol-Einheiten, |
| 42,5 Gew.-% | 2-Ethylhexylacrylat-Einheiten und |
| 1,3 Gew.-% | Allylmethacrylat-Einheiten. |

Es hat eine zahlenmittlere Teilchengröße von 115 nm. Der Monomerumsatz ist praktisch 100 %.

d) In einem druckfesten Polymerisationskessel aus rostfreiem Edelstahl, der mit einem heiz- oder kühlbaren Doppelmantel und einem Rührer ausgerüstst ist, werden vorgelegt:

| | |
|---|---|
| 350 Gew.-Teile | entsalztes Wasser, das sind 1,4 Gew.-Teile je 1 Gew.-Teil Vinylchlorid-Monomeres, |
| 0,38 Gew.-Teile | teilacetylierter Polyvinylalkohol, der 17,5 Gew.-% Acetatgruppen enthält, und dessen 4gew.%ige wäßrige Lösung bei 20 °C eine Viskosität von 35 mPa · s aufweist, das sind 0,15 Gew.-% Suspendiermittel, bezogen auf Vinylchlorid, |
| 0,1 Gew.-Teile | Lauroylperoxid, das sind 0,04 Gew.-%, bezogen auf Vinylchlorid, und |
| 0,38 Gew.-Teile | Calciumsulfat als Fällungsmittel, das sind 1,25 Gew.-Teile je 100 Gew.-Teile eingesetztes, nach den Verfahrensschritten a) bis c) erzeugtes Polymerisat. |

Der Polymerisationskessel wird nun geschlossen, der darin enthaltene Luftsauerstoff verdrängt und unter Rühren zugegeben:

| | |
|---|---|
| 250 Gew.-Teile | Vinylchlorid und danach |
| 73,5 Gew.-Teile | der nach den Verfahrensschritten a) bis c) erzeugten Dispersion, die 31,2 Gew.-Teile Polymeres enthält. |

Nun wird unter Fortsetzung des Rührens der Kesselinhalt auf 67 °C erwärmt und bei dieser Temperatur bis zu einem Vinylchlorid-Restdruck von 0,5 MPa polymerisiert, dann abgekühlt, die Suspension nach üblichem Verfahren von restlichem, monomerem Vinylchlorid und von der Hauptmenge der wäßrigen Phase befreit, das feuchte Polymere getrocknet. Es werden 10,1 Gew.-Teile Polymeres [nach den Verfahrensschritten a) bis c) hergestellt] auf 88,9 Gew.-Teile Vinylchlorid eingesetzt.

Der Umsatz des Vinylchlorids beträgt 88 %. Das nach den Verfahrensschritten a) bis d) erzeugte Pfropfpolymerisat enthält 5,3 Gew.-% polymerisierte Acrylsäurealkylester-Einheiten.

Es wird weiterbehandelt, wie in Beispiel 1 beschrieben, die gemessenen Werte sind in nachfolgender Tabelle aufgeführt.

Vergleichsversuch A

In den in Beispiel 1 beschriebenen Apparaturen wird das Verfahren nach DE 35 39 414, Beispiel 1 durchgeführt. Die buchstabengetreue Übernahme der Herstellungsvorschrift (A) ergibt keinen Latex. Es wird angenommen, daß es in der DE 35 39 414 auf Seite 5, Zeile 48: 113,575 Teile anstelle 113575 Teile und in Zeile 51: 84,577 Teile anstelle 84577 Teile heißen soll. Mit dem so abgeänderten Rezept konnte eine pfropfbare, wäßrige Polymerdispersion erhalten werden. Die Ausführung des Verfahrensschrittes (B) kann mit der Polymerdispersion durchgeführt werden und verläuft wie in der Schrift angegeben. Das erhaltene Pfropfpolymere wird behandelt, wie in Beispiel 1 angegeben, die gemessenen Werte sind in nachfolgender Tabelle aufgeführt.

Vergleichsversuch B

Es wird nach dem bekannten Masse-Polymerisations-Verfahren ein nicht modifiziertes Vinylchlorid-Homopolymerisat mit K-Wert 60 hergestellt und behandelt, wie in Beispiel 1 angegeben. Die zum Vergleich gemessenen Werte sind in nachfolgender Tabelle angegeben.

In der Tabelle bedeuten:

SG = Schüttgewicht
WA = Weichmacheraufnahme
St = Styrol
AAE = Acrylsäurealkylester
VC = Vinylchlorid

TABELLE

| Beispiel Vergleichs-versuch | Zusammensetzung der Polymeren | | | | | | | | SG g/dm³ | WA % | Transparenz | | Schlagzähigkeit kJ/m² | |
|---|---|---|---|---|---|---|---|---|---|---|---|---|---|---|
| | Vorpolymerisat Gew.-% | | | | | | Pfropfpolymer Gew.-% | | | | Lichtdurch-lässigkeit % | reflektiertes Streulicht % | aK₂₃ | aK₀ |
| | Kern | | Schale | | Gesamt | | | | | | | | | |
| | St | AAE | St | AAE | St | AAE | AAE | VC | | | | | | |
| 1 | 71,2 | 28,1 | 37,1 | 60,5 | 57,2 | 41,4 | 4,7 | 88,7 | 565 | 12,5 | 81 | 20 | 51 | 11 |
| 2 | 79,0 | 20,2 | 24,2 | 75,2 | 54,8 | 44,5 | 4,7 | 89,5 | 600 | 14,5 | 80 | 21 | 44 | 10 |
| 3 | 77,8 | 21,4 | 24,6 | 73,5 | 56,2 | 42,5 | 5,3 | 87,6 | 580 | 13,5 | 81 | 20 | 49 | 12 |
| A | 99 | - | - | 99 | 57 | 43 | 4,8 | 88,8 | 635 | 6,1 | 80 | 31 | 43 | 8 |
| B | - | - | - | - | - | - | - | 100 | 580 | 15,5 | 83 | 19 | 6 | 4 |

## Patentansprüche

1. Verfahren zur Herstellung eines Polymerisates, das aus einer überwiegenden Menge polymerisierter Einheiten des Vinylchlorids, ferner aus polymerisierten Einheiten mindestens einer aromatischen Vinylverbindung, mindestens eines Acrylsäureesters sowie mindestens einem vernetzend wirkenden Monomeren besteht, Reste von Polymerisationshilfsstoffen enthält und dessen Teilchen aus Polymerschichten unterschiedlicher Zusammensetzung aufgebaut sind, wobei ohne Zwischenbehandlung der erzeugten Polymerdispersionen unmittelbar hintereinanderfolgende Verfahrensschritte angewendet werden:

   a) Herstellung eines Vorpolymerisates, das aus polymerisierten Einheiten mindestens eines Acrylsäurealkylesters mindestens eines Methacrylsäurealkylesters oder Mischungen dieser Verbindungen besteht und zusätzlich polymerisierte Einheiten des Styrols oder des α-Methylstyrols oder Einheiten dieser beiden Verbindungen enthalten kann, durch Polymerisation in wäßriger Emulsion in Gegenwart mindestens eines Emulgators, mindestens eines wasserlöslichen, radikalisch zerfallenden Initiators und gegebenenfalls eines vernetzend wirkenden Monomeren; danach

   b) kontinuierliche oder portionsweise Zugabe eines Gemisches einer aromatischen Vinylverbindung mit einem vernetzend wirkenden Monomeren und gleichzeitig damit Zugabe von einer wäßrigen Lösung eines Emulgators und von einer wäßrigen Lösung eines wasserlöslichen, radikalisch zerfallenden Initiators in getrennten Strömen; anschließend

   c) kontinuierliche oder portionsweise Zugabe eines Gemisches eines Acrylsäurealkylesters mit einem vernetzend wirkenden Monomeren und gleichzeitig damit Zugabe von einer wäßrigen Lösung eines Emulgators und, wenn erforderlich, von einer wäßrigen Lösung mindestens eines wasserlöslichen, radikalisch zerfallenden Initiators in getrennten Strömen, wobei das durch die Verfahrensschritte a) bis c) erzeugte Polymere x) 41 bis 76 Gew.-% aromatische Vinylverbindung, y) 24 bis 59 Gew.-% Acrylsäurealkylester und z) 0,2 bis 4 Gew.-% vernetzende(s) Monomere(s), jeweils bezogen auf das Polymere, in polymerisierter Form enthält, wobei ferner $x + y + z = 100\%$ ist; danach

   d) Polymerisaton von 5 bis 30 Gew.-Teilen des gemäß der Schritte a) bis c) hergestellten Polymeren in wäßriger Dispersion in Gegenwart von 70 bis 95 Gew.-Teilen Vinylchlorid oder einer überwiegend Vinylchlorid enthaltenden Mischung von Monomeren, ferner in Gegenwart mindestens eines Suspendiermittels und mindestens eines öllöslichen, radikalisch zerfallenden Initiators unter Zusatz von Wasser und gegebenenfalls weiterer Polymerisationshilfsstoffen bei 50 bis 80 °C, Entfernung von restlichen, nicht umgesetzten Monomeren sowie von der Hauptmenge der wäßrigen Flotte und Trocknung des so erhaltenen Polymerisates,

   dadurch gekennzeichnet, daß das in Schritt b) verwendete Monomerengemisch mindestens einen Acrylsäurealkylester und das in Schritt c) verwendete Monomerengemisch mindestens eine aromatische Vinylverbindung enthält.

2. Verfahren nach Anspruch 1, dadurch gekennzeichnet, daß vor Beginn der Polymerisation nach Schritt d) ein Fällungsmittel für den oder die in den Schritten a) bis c) verwendeten Emulgator(en) dem Ansatz vor Zugabe der gemäß a) bis c) hergestellten Polymerdispersion zugesetzt wird.

3. Verfahren nach Anspruch 1 oder 2, dadurch gekennzeichnet, daß das in Verfahrensschritt c) eingesetzte Monomerengemisch auf 1 Gew.-Teil Acrylsäurealkylester 0,2 bis 1,4 Gew.-Teile aromatische Vinylverbindung enthält.

4. Verfahren nach einem oder mehreren der Ansprüche 1 bis 3, dadurch gekennzeichnet, daß das in Verfahrensschritt b) eingesetzte Monomerengemisch auf 1 Gew.-Teil Acrylsäurealkylester 1,6 bis 4 Gew.-Teile aromatische Vinylverbindung enthält.

5. Verfahren nach einem oder mehreren der Ansprüche 1 bis 4, dadurch gekennzeichnet, daß je 100 Gew.-Teile des nach den Verfahrensschritten a) bis c) hergestellten Polymerisates 0,5 bis 5 Gew.-Teile des Fällungsmittels bei der Polymerisation nach d) eingesetzt werden.

6. Verfahren nach einem oder mehreren der Ansprüche 1 bis 5, dadurch gekennzeichnet, daß nach Beendigung des Verfahrensschrittes c) der Reaktionsmischung je 1 Gew.-Teil der Gesamtmenge aller in den Verfahrensschritten a) bis c) eingesetzten Monomeren 0,5 bis 0,01 Gew.-Teile mindestens eines wasserlöslichen, radikalisch zerfallenden Initiators während 0,5 bis 4 Stunden unter Rühren bei einer Temperatur von 50 bis 80 °C zugesetzt werden und erst danach die Reaktionsmischung für die Polymerisation nach Verfahrensschritt d) verwendet wird.

7. Verfahren nach einem oder mehreren der Ansprüche 1 bis 6, dadurch gekennzeichnet, daß bei den Verfahrensschritten b) und c) zunächst aus den Monomeren und der wäßrigen Lösung des Emulgators unter Rühren eine Monomeremulsion in Wasser erzeugt wird und diese sowie die wäßrige Lösung des Initiators in getrennten Strömen der nach Verfahrensschritt a) erzeugten Polymerdispersion kontinuierlich oder portionsweise zugegeben werden.

## Claims

1. A process for the preparation of a polymer, which comprises a predominant amount of polymerized units of vinyl chloride and also comprises polymerized units of at least one aromatic vinyl compound, at least one acrylic acid ester and at least one monomer having a crosslinking action, and contains residues of polymerization auxiliaries, the particles of which polymer are built up of polymer layers of different composition, process steps being carried out in immediate succession without intermediate treatment of the polymer dispersion produced:

   a) preparation of a prepolymer, which comprises polymerized units of at least one alkyl acrylate, at least one alkyl methacrylate, or mixtures of these compounds, and additionally can contain polymerized units of styrene or of $\alpha$-methylstyrene or units of these two compounds, by polymerization in aqueous emulsion in the presence of at least one emulsifier, at least one water-soluble initiator which decomposes into free radicals and, optionally, a monomer having a crosslinking action; then

   b) continuous or portion-wise addition of a mixture of an aromatic vinyl compound with a monomer having a crosslinking action and, at the same time, addition of an aqueous solution of an emulsifier and of an aqueous solution of a water-soluble initiator which decomposes into free radicals, in separate streams; then

   c) continuous or portion-wise addition of a mixture of an alkyl acrylate with a monomer having a crosslinking action and, at the same time, addition of an aqueous solution of an emulsifier and, if necessary, of an aqueous solution of at least one water-soluble initiator which decomposes into free radicals, in separate streams, the polymer produced by process steps a) to c) containing x) 41 to 76% by weight of aromatic vinyl compound, y) 24 to 59% by weight of alkyl acrylate and z) 0.2 to 4% by weight of crosslinking monomer(s), in each case with respect to the polymer, in polymerized form, where, in addition, x + y + z = 100%; then

   d) polymerization of 5 to 30 parts by weight of the polymer prepared according to steps a) to c) in aqueous dispersion in the presence of 70 to 95 parts by weight of vinyl chloride or of a mixture of monomers containing predominantly vinyl chloride, and also in the presence of at least one suspending agent and at least one oil-soluble initiator which decomposes into free radicals, with the addition of water and optionally further polymerization auxiliaries, at 50 to 80°C, removal of residual unconverted monomers and of the bulk of the aqueous liquor and drying of the polymer thus obtained, wherein the monomer mixture used in step b) contains at least one alkyl acrylate and the monomer mixture used in step c) contains at least one aromatic vinyl compound.

2. The process as claimed in claim 1, wherein, before the start of the polymerization according to step d), a precipitating agent for the emulsifier(s) used in steps a) to c) is added to the batch before adding the polymer dispersion prepared according to a) to c).

3. The process as claimed in claim 1 or 2, wherein the monomer mixture used in process step c) contains 0.2 to 1.4 parts by weight of aromatic vinyl compound per 1 part by weight of alkyl acrylate.

4. The process as claimed in one or more of claims 1 to 3, wherein the monomer mixture used in process step b) contains 1.6 to 4 parts by weight of aromatic vinyl compound per 1 part by weight of alkyl acrylate.

5. The process as claimed in one or more of claims 1 to 4, wherein 0.5 to 5 parts by weight of the precipitating agent are used, per 100 parts by weight of the polymer prepared according to process steps a) to c), in the polymerization according to d).

6. The process as claimed in one or more of claims 1 to 5, wherein, after process step c) is complete, per 1 part by weight of the total amount of all of the monomers used in process steps a) to c), 0.5 to 0.01 parts by weight of at least one water-soluble initiator which decomposes into free radicals is added to the reaction mixture in the course of 0.5 to 4 hours, with stirring, at a temperature of 50 to 80°C and the reaction mixture is used for the polymerization according to process step d) only after this addition has been carried out.

7. The process as claimed in one or more of claims 1 to 6, wherein, in process steps b) and c), a monomer emulsion in water is first produced from the monomers and the aqueous solution of the emulsifier and said monomer emulsion and the aqueous solution of the initiator are added continuously or portion-wise in separate streams, to the polymer dispersion produced according to process step a).

## Revendications

1. Procédé de préparation d'un produit de polymérisation formé d'une proportion principale de motifs de chlorure de vinyle, ainsi que de motifs d'un ou de plusieurs composés vinyliques aromatiques, d'un ou plusieurs esters de l'acide acrylique et d'un ou plusieurs monomères réticulants, contenant des restes d'adjuvants de polymérisation et dont les particules sont formées de couches du polymère de composition différente, en effectuant successivement les étapes opératoires suivantes aussitôt l'une après l'autre sans traitement intermédiaire de la dispersion de polymère formée :
   a) on commence par préparer un prépolymère de motifs d'un ou de plusieurs esters alkyliques de l'acide acrylique, d'un ou plusieurs esters alkyliques de l'acide méthacrylique ou de ces deux sortes d'esters à la fois et pouvant comprendre en outre des motifs de styrène ou d'$\alpha$-méthylstyrène ou de ces deux composés ensemble, par polymérisation en émulsion aqueuse en présence d'un ou plusieurs émulsionnants, d'un ou plusieurs inducteurs radicalaires hydrosolubles, et le cas échéant d'un monomère réticulant ; puis
   b) on ajoute en continu ou en discontinu un mélange d'un composé vinylique aromatique et d'un monomère réticulant et on ajoute en même temps une solution aqueuse d'un émulsionnant et une solution aqueuse d'un inducteur radicalaire hydrosoluble en additions séparées ; ensuite
   c) on ajoute en continu ou en discontinu un mélange d'un acrylate d'alkyle et d'un monomère réticulant et on ajoute en même temps une solution aqueuse d'un émulsionnant ainsi que, si cela est nécessaire, une solution aqueuse d'un ou de plusieurs inducteurs radicalaires hydrosoluble, en additions séparées, le polymère formé dans les étapes a) à c) comprenant à l'état polymérisé x) de 41 à 76 % en poids du composé vinylique aromatique, y) de 24 à 59 % en poids de l'acrylate d'alkyle et z) de 0,2 à 4 % en poids du ou des monomères réticulants, proportions qui sont toutes rapportées au polymère et la somme x + y + z constituant 100 % ; et enfin
   d) on polymérise 5 à 30 parties en poids du prépolymère formé dans les étapes a) à c) en dispersion aqueuse avec de 70 à 95 parties en poids de chlorure de vinyle ou de plusieurs monomères comprenant principalement du chlorure de vinyle, en présence d'un ou de plusieurs agents de suspension et d'un ou plusieurs inducteurs radicalaires oléosolubles et tout en ajoutant de l'eau et le cas échéant d'autres adjuvants de polymérisation, entre 50 et 80°C, puis on élimine les monomères résiduels n'ayant pas réagi ainsi que la majeur partie du bain aqueux, et on sèche le produit de polymérisation ainsi obtenu, procédé caractérisé en ce que le mélange de monomères employé dans l'étape b) comprend au moins un acrylate d'alkyle et le mélange de l'étape c) au moins un composé vinylique aromatique.

2. Procédé selon la revendication 1, caractérisé en ce que, avant de commencer la polymérisation dans l'étape d) on ajoute au mélange un agent de précipitation pour le ou les émulsionnant des étapes a) à c) avant l'addition de la dispersion du polymère formée dans les étapes a) à c).

3. Procédé selon la revendication 1 ou 2, caractérisé en ce que le mélange de monomères employé dans l'étape c) contient de 0,2 à 1,4 partie en poids du composé vinylique aromatique par partie de l'acrylate d'alkyle.

4. Procédé selon une ou plusieurs des revendications 1 à 3, caractérisé en ce que le mélange de monomères employé dans l'étape b) contient de 1,6 à 4 parties en poids du composé vinylique aromatique par partie de l'acrylate d'alkyle.

5. Procédé selon une ou plusieurs des revendications 1 à 4, caractérisé en ce que dans l'étape de polymérisation d) on ajoute de 0,5 à 5 parties en poids de l'agent précipitant pour 100 parties du polymère formé dans les étapes a) à c).

6. Procédé selon une ou plusieurs des revendications 1 à 5, caractérisé en ce que quand l'étape c) est terminée on ajoute au mélange de réaction, par partie en poids de la quantité totale de tous les monomères utilisés dans les étapes a) à c), de 0,5 à 0,01 partie en poids d'un ou de plusieurs inducteurs radicalaires hydrosolubles en une durée d'une demi-heure à 4 heures, tout en agitant et à une température de 50 à 80°C, et seulement après on utilise le mélange de réaction pour la polymérisation suivant l'étape d).

7. Procédé selon une ou plusieurs des revendications 1 à 6, caractérisé en ce que dans les étapes b) et c) on forme d'abord en agitant une émulsion aqueuse des monomères avec les monomères et la solution aqueuse de l'émulsionnant, émulsion que l'on ajoute, ainsi que la solution aqueuse de l'inducteur, en additions séparées, à la dispersion du polymère formée dans l'étape a), en continu ou en discontinu.